# FASCICULE DE BREVET EUROPEEN

(11) **EP 1 951 945 B1**
(45) Date de publication et mention de la délivrance du brevet: **23.02.2011**
(21) Numéro de dépôt: 06808252.8
(22) Date de dépôt: 25.08.2006
(51) Int. Cl.: D04H 3/02

(54) **FABRICATION DE STRUCTURES ANNULAIRES FIBREUSES TRIDIMENSIONNELLES**
VERFAHREN ZUR HERSTELLUNG VON DREIDIMENSIONAL RINGFÖRMIG GESTALTETEN FASERFORMKÖRPERN
METHOD FOR MAKING THREE-DIMENSIONAL FIBROUS ANNULAR STRUCTURES

(30) Priorité: 24.10.2005 FR 0510811
(43) Date de publication de la demande: 06.08.2008
(73) Titulaire: MESSIER-BUGATTI, 78140 Vélizy Villacoublay (FR)
(72) Inventeur: DELECROIX, Vincent, F-69390 Vernaison (FR); DUVAL, Renaud, 78320 Le Mesnil Saint Denis (FR)
(74) Mandataire: Joly, Jean-Jacques
(86) Numéro de dépôt international: PCT/FR2006/050812
(87) Numéro de publication internationale: WO 2007/048946

(56) Documents cités:
- EP-A- 0 721 835
- WO-A-98/49382
- WO-A-2005/111292
- US-A- 5 662 855
- US-A- 6 009 605
- US-B1- 6 363 593

## Description

### Arrière-plan de l'invention

L'invention concerne la fabrication de structures annulaires fibreuses tridimensionnelles.

Un domaine particulier de l'invention est la fabrication de préformes fibreuses annulaires épaisses destinées à constituer le renfort fibreux de pièces annulaires en matériau composite, notamment des disques de frein, tels que des disques en matériau composite/carbone (C/C) pour des freins d'avions.

Un processus habituel pour la réalisation de préformes fibreuses annulaires consiste à superposer et à lier entre elles des strates bidimensionnelles pour former des plaques dans lesquelles les préformes sont découpées. Un tel processus, décrit par exemple dans les documents US 4 790 052 et US 5 792 715, présente l'inconvénient évident d'une perte de matière importante, inconvénient qui est particulièrement pénalisant dans le cas de fibres relativement coûteuses telles que des fibres de carbone ou de précurseur de carbone.

Différentes propositions ont été faites pour éviter cet inconvénient et obtenir directement une structure fibreuse ayant une forme aussi proche que possible de la forme annulaire souhaitée. Ainsi, il a été proposé dans les documents US 6 009 605 et US 5 662 855 de réaliser des préformes par superposition et liaison entre elles de couches formées par des tresses enroulées à plat en hélice. Quant aux documents US 6 363 593 et US 6 367 130, ils proposent l'utilisation d'un tissu hélicoïdal enroulé en spires superposées et liées entre elles.

Ces techniques requièrent la réalisation d'une texture fibreuse (tresse ou tissu hélicoïdal) intermédiaire entre des fils ou câbles et la préforme annulaire à fabriquer.

Pour éviter cette étape intermédiaire, il est proposé dans le document WO 98/49382 de former une masse de fibres désordonnées sur un support annulaire et de lier les fibres par aiguilletage. Toutefois, ce document est silencieux sur les moyens à utiliser en pratique pour obtenir une préforme annulaire satisfaisant, au moins en ce qui concerne son homogénéité, des conditions pour son utilisation dans certaines applications où un haut degré d'exigence existe quant à l'homogénéité et au contrôle des propriétés mécaniques, en particulier pour son utilisation comme préforme de disque de frein d'avion.

Dans le document US 2005/0172465, il est proposé de former une préforme annulaire par dépôt régulier et contrôlé de fibres courtes sur un plateau annulaire rotatif et aiguilletage progressif. On peut ainsi obtenir une préforme homogène, mais en passant par une étape intermédiaire d'obtention de fibres courtes.

Par ailleurs, le document WO 2005/111292, publié après la date de priorité de la présente demande, décrit un procédé de réalisation d'une nappe fibreuse hélicoïdale par superposition et assemblage d'une nappe transversale formée par nappage en direction radiale et une nappe longitudinale helicoïdale.

### Objet et résumé de l'invention

Selon un de ses aspects, l'invention a pour but de fournir un procédé permettant de fabriquer une structure fibreuse annulaire directement à partir de fils ou câbles du commerce, en limitant les opérations textiles afin de réduire autant que possible le coût de fabrication.

Ce but est atteint grâce à un procédé qui comprend les étapes consistant à :
- fournir une première nappe fibreuse formée d'éléments sensiblement unidirectionnels ;
- former une première nappe annulaire, ou nappe transversale, par dépôt de la première nappe fibreuse alternativement dans un sens et dans l'autre entre des couronnes circulaires externe et interne coaxiales, avec maintien au niveau desdites couronnes,
- fournir une deuxième nappe fibreuse formée d'éléments sensiblement unidirectionnels,
- former une deuxième nappe annulaire, ou nappe circonférentielle, par dépôt de la deuxième nappe fibreuse en direction circonférentielle entre ladites couronnes externe et interne,
- lier les nappes annulaires transversale et circonférentielle entre elles, et
- entraîner les nappes annulaires transversale et circonférentielle en rotation autour de l'axe des couronnes externe et interne en réalisant une pluralité de tours complets pour obtenir, directement à partir desdits éléments sensiblement unidirectionnels, une structure fibreuse annulaire épaisse ayant des couches formées par la nappe transversale qui alternent et sont liées avec des couches formées par la nappe circonférentielle.

La première nappe fibreuse, comme la deuxième nappe fibreuse, peut être formée par des fils, des câbles, ou encore par un ruban obtenu par étalement d'un câble ou par plusieurs de tels rubans juxtaposés. On peut ainsi obtenir une structure fibreuse annulaire pratiquement sans chute directement à partir de fils ou de câbles.

Selon une particularité du procédé, le dépôt de la première nappe fibreuse est réalisé en diminuant la largeur de celle-ci entre la couronne externe et la couronne interne, et la nappe circonférentielle est formée avec une densité décroissante entre la couronne externe et la couronne interne. Avantageusement, le dépôt de la nappe annulaire transversale est réalisé de manière à lui conférer une densité sensiblement constante le long d'une même circonférence. Ainsi, on peut obtenir une structure fibreuse sensiblement homogène, l'augmentation de densité de la nappe transversale due au resserrement de la première nappe fibreuse en direction de la couronne interne pouvant être compensée par la diminution de densité de la nappe circonférentielle.

Selon une autre particularité du procédé, le dépôt de la première nappe fibreuse est réalisé de manière que les éléments fibreux de la nappe annulaire forment un angle compris entre 45° et 75° avec une tangente à la direction circonférentielle au niveau de la circonférence médiane de la nappe annulaire transversale. De préférence, cet angle est d'environ 60° et on obtient alors, y compris avec la nappe circonférentielle, une structure fibreuse avec des éléments fibreux qui se croisent dans trois directions formant entre elles des angles de 60° environ.

Avantageusement, le maintien de la nappe transversale annulaire au niveau des couronnes externe et interne est réalisé au moyen de picots portés par lesdites couronnes.

Avantageusement encore, l'entraînement en rotation est réalisé par l'intermédiaire des couronnes externe et interne.

Selon une autre particularité du procédé les nappes annulaires transversale et circonférentielle sont formées sur un support annulaire horizontal qui est disposé entre les couronnes externe et interne et qui est abaissé au fur et à mesure de la formation de la structure fibreuse annulaire. Après formation de la structure, celle-ci peut alors être dégagée par déplacement vertical relatif entre le support annulaire et les couronnes externe et interne.

Avantageusement, la liaison entre les nappes annulaires transversale et circonférentielle est réalisée au fur et à mesure de leur dépôt, cette liaison étant par exemple réalisée par aiguilletage.

Selon encore une autre particularité du procédé, le dépôt de la nappe annulaire circonférentielle est réalisé après celui de la nappe annulaire transversale et immédiatement avant la liaison entre ces nappes.

Selon un autre de ses aspects, l'invention a aussi pour but de fournir une installation convenant pour la mise en oeuvre du procédé.

Ce but est atteint grâce à une installation comportant :
- un dispositif d'amenée d'une première nappe fibreuse et de dépôt de celle-ci sur un support annulaire alternativement dans un sens et dans l'autre entre des couronnes circulaires coaxiales externe et interne situées de part et d'autre du support annulaire, pour former une première nappe annulaire, ou nappe transversale,
- des organes de maintien de la nappe annulaire transversale au niveau des couronnes externe et interne,
- un dispositif d'amenée d'une deuxième nappe fibreuse sur le support annulaire et de dépôt de celle-ci en direction circonférentielle entre les couronnes externe et interne pour former une deuxième nappe annulaire, ou nappe circonférentielle,
- un dispositif de liaison des nappes annulaires transversale et circonférentielle entre elles, et
- un dispositif d'entraînement en rotation des nappes annulaires transversale et circonférentielle autour de l'axe des couronnes externe et interne.

Avantageusement, le dispositif d'amenée et de dépôt de la première nappe fibreuse comprend :
- un dispositif d'alimentation de la première nappe fibreuse,
- un organe formant navette mobile en translation alternative entre des positions situées au-delà de la couronne externe et en deçà de la couronne interne et pouvant agir sur la première nappe fibreuse pour l'amener vers la couronne interne en diminuant la largeur de la nappe. De préférence, l'organe formant navette présente une partie courbe destinée à prendre appui sur la première nappe fibreuse pour amener celle-ci au niveau de la couronne interne en lui donnant, à ce niveau une courbure correspondant à celle de la couronne interne.

Avantageusement encore, les organes de maintien de la nappe transversale sont des picots portés par les couronnes externe et interne.

Selon une particularité supplémentaire de l'installation, celle-ci comporte en outre des organes applicateurs sous forme de barres courbes mobiles pour contribuer à engager la première nappe fibreuse sur les picots par appui sur la première nappe fibreuse.

Avantageusement, le dispositif d'entraînement en rotation comprend les couronnes externe et interne.

Avantageusement encore, le support annulaire est mobile verticalement.

Selon encore une autre particularité de l'installation, le dispositif de liaison est un dispositif d'aiguilletage disposé immédiatement en aval du dispositif d'amenée de la deuxième nappe fibreuse sur le support.

### Brève description des dessins

L'invention sera mieux comprise à la lecture de la description faite ci-après, à titre indicatif mais non limitatif, en référence aux dessins annexés sur lesquels :
- la figure 1 est une vue très schématique générale en perspective montrant un mode de réalisation d'une installation permettant la mise en oeuvre d'un procédé conforme à l'invention ;

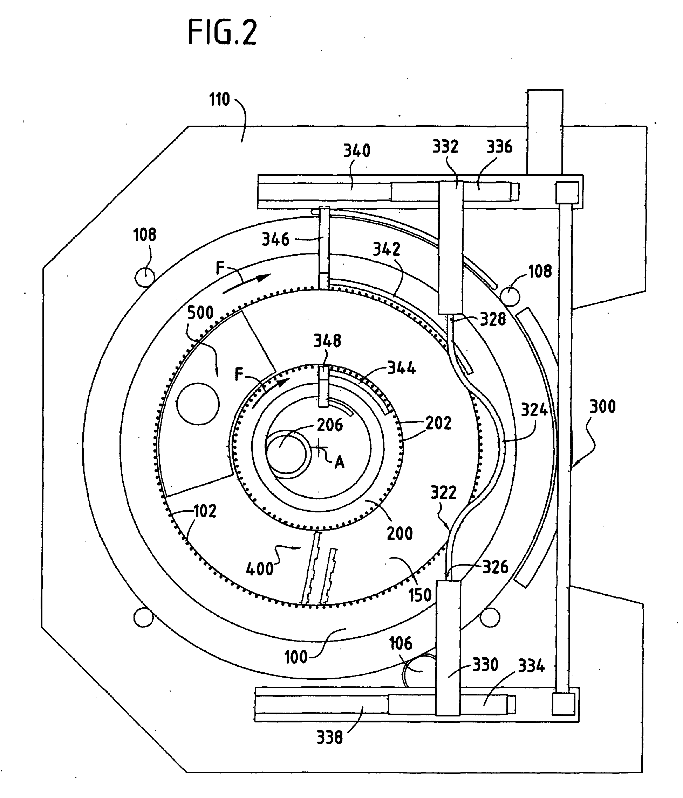

- la figure 2 est une vue très schématique de dessus de l'installation de la figure 1 ;
- la figure 3 est une vue partielle en perspective et en coupe de l'installation de la figure 1 ;
- la figure 4 est une vue très schématique partielle de l'installation de la figure 1 montrant plus particulièrement le dispositif d'alimentation et de nappage pour former une nappe transversale ;
- la figure 5 illustre l'alimentation de rubans constitutifs de la nappe transversale ;
- la figure 6 est une vue très schématique partielle de dessus de l'installation de la figure 1 montrant la formation de la nappe transversale ;
- les figures 7A à 7G illustrent des étapes successives du processus de nappage permettant la formation de la nappe transversale ;
- la figure 8 est une vue partielle de la nappe transversale formée ;
- les figures 9 et 9A sont des vues très schématiques partielles montrant plus particulièrement le dispositif d'alimentation et de dépôt permettant de former une nappe circonférentielle ; et
- les figures 10A à 10C sont des vues très schématiques partielles montrant une structure fibreuse annulaire à deux stades de sa fabrication puis au stade de son évacuation après fabrication.

### Description détaillée de modes de réalisation de l'invention

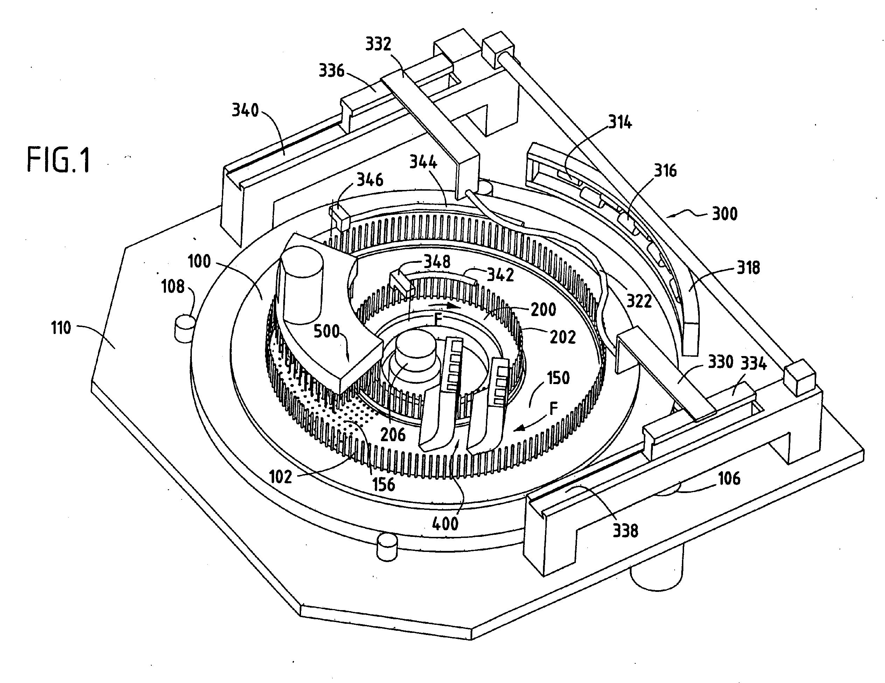

L'installation montrée par la figure 1 comporte deux couronnes circulaires horizontales de même axe vertical A, une couronne externe 100 et une couronne interne 200 avec un support ou plateau annulaire horizontal 150 s'étendant entre les deux couronnes.

La couronne externe 100 porte une rangée circulaire de picots 102, au nombre de plusieurs dizaines. Les picots 102 s'étendent verticalement vers le haut, à partir de la surface supérieure de la .couronne 100, au voisinage immédiat de son bord interne. De façon similaire, la couronne interne 200 porte une rangée circulaire de picots 202, au nombre de plusieurs dizaines. Les picots 202 s'étendent verticalement vers le haut à partir de la surface supérieure de la couronne 200 au voisinage immédiat de son bord externe. Les surfaces supérieures des couronnes 100 et 200 sont sensiblement dans le même plan horizontal.

Les couronnes 100 et 200 sont entraînées en rotation de façon synchronisée autour de l'axe A. L'entraînement peut être réalisé au moyen de galets 106, 206 agissant par friction contre une surface latérale externe de la couronne 100 et une surface latérale interne de la couronne 200, respectivement. Les galets 106, 206 sont entraînés par des moteurs respectifs, ou un même moteur par l'intermédiaire d'une transmission, ces moyens d'entraînement n'étant pas représentés. En variante, le déplacement en rotation des couronnes 100, 200 peut être obtenu par des pignons engrenant avec des couronnes dentées formées le long des bords latéraux externe et interne des couronnes 100 et 200. Des galets (tels que 108 pour la couronne 100) et des chemins de roulement (non représentés) guident et supportent les couronnes 100 et 200 par rapport à un bâti 110 de l'installation.

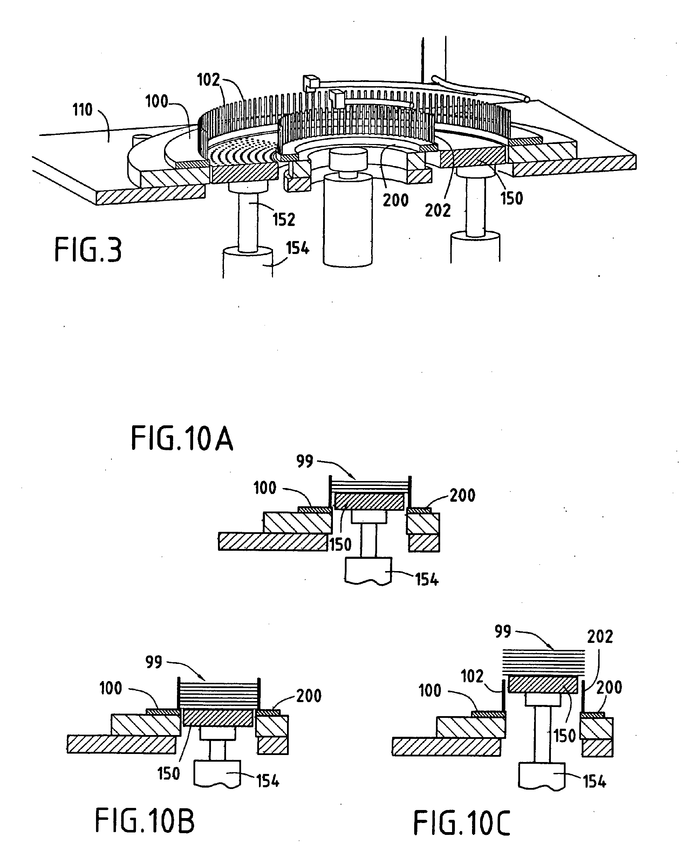

Le plateau annulaire 150 est non rotatif, mais est mobile verticalement en étant supporté par des tiges verticales 152 de vérins 154 (figure 3), par exemple au nombre de 3. Les vérins sont synchronisés pour maintenir le plateau sensiblement horizontal.

L'installation de la figure 1, comporte en outre : un dispositif 300 d'alimentation et de nappage d'une première nappe fibreuse destinée à former une nappe transversale s'étendant entre les couronnes 100 et 200 ; un dispositif 400 d'alimentation et de dépôt d'une deuxième nappe fibreuse destinée à former une nappe circonférentielle s'étendant entre les couronnes 100 et 200 ; et un dispositif 500 de liaison des nappes transversale et circonférentielle entre elles. Le dispositif d'alimentation et de dépôt 400 est disposé en aval du dispositif d'alimentation et de nappage 300 et immédiatement en amont du dispositif de liaison 500, les termes "aval" et "amont" étant ici utilisés en relation avec le sens de rotation des couronnes 100 et 200 (flèches F).

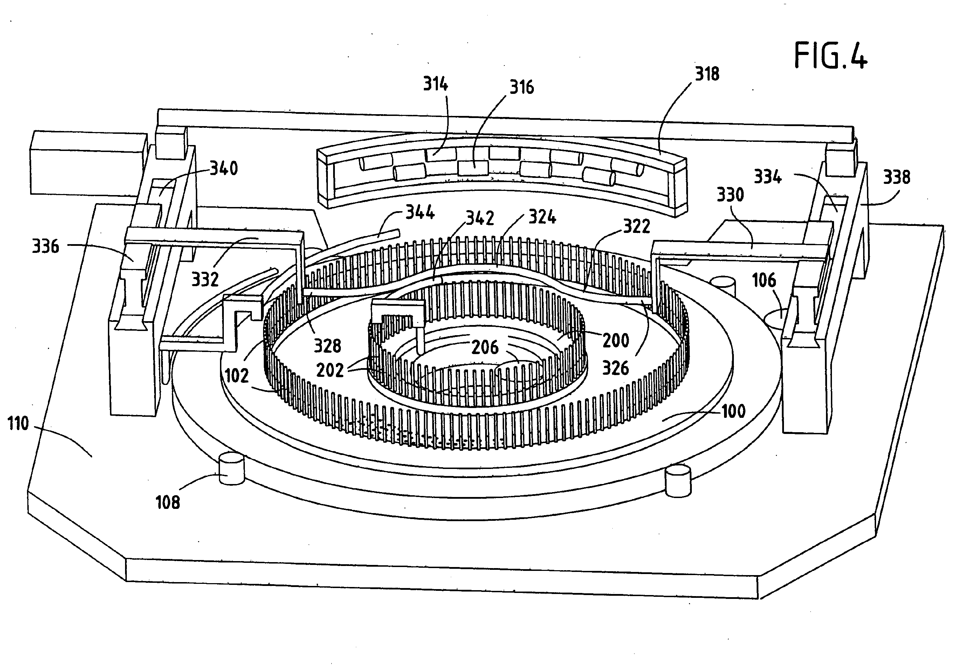

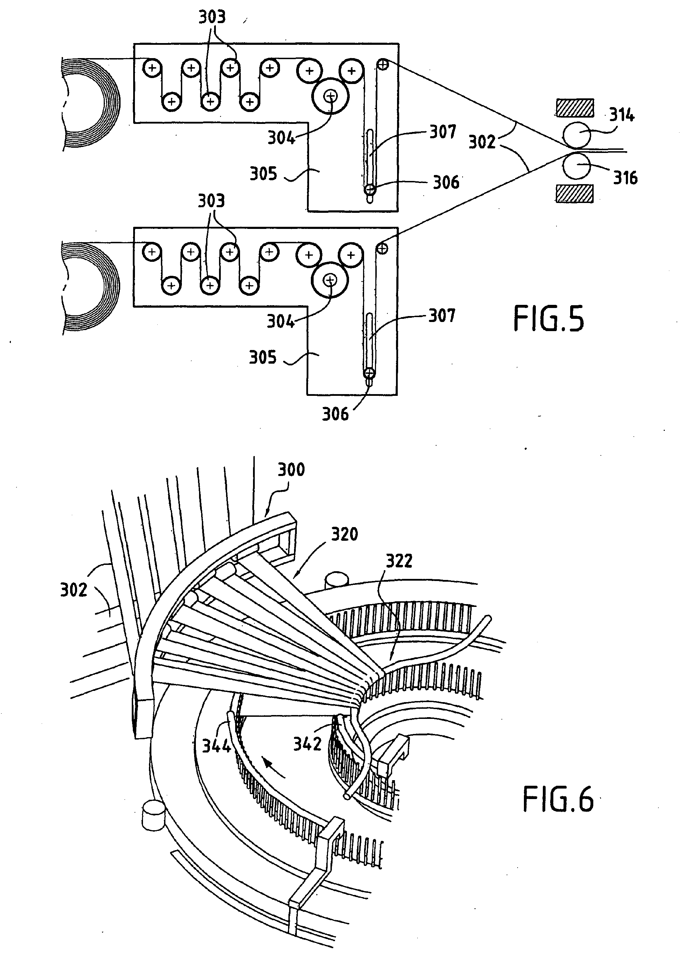

Le dispositif 300 d'alimentation et de nappage (figures 4 à 6) reçoit une pluralité de rubans 302 (figures 5, 6) formés par étalement de câbles respectifs. Chaque ruban passe sur une série de rouleaux de tension 303, et sur un dispositif d'appel avec galet motorisé 304, les rouleaux de tension et le dispositif d'appel étant montés sur une platine 305. Chaque ruban passe ensuite sur un rouleau 306 formant régulateur de tension, le rouleau 306 étant mobile librement dans une lumière verticale 307 formée dans la platine 305. Un tel dispositif d'alimentation est bien connu en soi.

Deux rangées de rouleaux 314, 316 sont montées dans un cadre 318 supporté par le bâti 110 et reçoivent les rubans 302 sous tension pour les réunir afin de former une nappe fibreuse 320 par juxtaposition des rubans (figure 6). Les rouleaux des rangées superposées 314, 316 sont disposés de façon alternée, ou en quinconce, et les rangées 314, 316 s'étendent suivant un arc de cercle centré sur l'axe A pour favoriser le nappage de la nappe 320 suivant un secteur annulaire.

Le dispositif d'alimentation et de nappage 300 comporte en outre un organe de nappage ou navette 322 qui est mobile en translation en direction de préférence sensiblement radiale dans un sens et dans l'autre entre une position arrière située à l'extérieur de la couronne externe 100 et une position avant située à l'intérieur de la couronne interne 200. Sur son trajet entre ses positions arrière et avant, la navette 322 passe au-dessus des couronnes 100 et 200.

Sur son trajet de la position arrière vers la position avant, la navette 322 guide la nappe 320 pour l'amener jusqu'à la couronne interne 200 tout en resserrant la nappe pour conférer une forme de secteur d'anneau au segment de nappe s'étendant entre les couronnes 100 et 200. A cet effet, la navette 322 est formée par une barre avec une partie centrale 324 courbe dont la courbure correspond à celle de l'extrémité interne d'un segment de nappe. En d'autres termes, la partie centrale 324 a une forme d'arc de cercle centré sur l'axe A lorsque la navette 322 est en position avant. La partie centrale 324 se raccorde aux extrémités 326, 328 de la navette par des parties incurvées conservant, du côté interne de la navette, une forme générale convexe propre à assurer le resserrement de la nappe 320.

Les extrémités 326, 328 de la navette sont reliées à des bras 330, 332 qui sont fixés sur des blocs 334, 336 mobiles en translation le long de glissières 338, 340 portées par le bâti 110. Les blocs 334, 336 sont déplacés en synchronisme le long des glissières 338, 340 par des moyens d'entraînement (non représentés) tels que des vérins, ou encore des câbles ou courroies mûs par moteurs.

Le dispositif d'alimentation et de nappe 300 comporte en outre deux organes applicateurs 342, 344 respectivement externe et interne, en forme de barreaux courbes horizontaux. Les organes applicateurs ou barreaux courbes 342, 344 sont destinés à engager sur les picots 102, 202 les extrémités de chaque segment de la nappe fibreuse 106 nappée entre les couronnes 100 et 200. Le barreau 342 s'étend sur un arc de cercle centré sur l'axe A et situé immédiatement à l'extérieur de la rangée de picots 102. Le barreau 342 a une longueur au moins égal e et de préférence supérieure à celle de l'extrémité externe d'un segment de nappe fibreuse 106 nappée. Le barreau 344 s'étend sur un arc de cercle centré sur l'axe A et situé immédiatement à l'intérieur de la rangée de picots 202. Le barreau 344 a une longueur au moins égale et de préférence supérieure à celle de l'extrémité interne d'un segment de nappe fibreuse 106 nappée. Les barreaux 344, 346 ont une section sensiblement en demi-lune avec le côté plan faisant face aux picots 102, 202, respectivement.

A leurs extrémités amont, les barreaux 342, 344 sont portés par des bras coudés 346, 348. Le bras 346 a une partie horizontale qui s'étend au-dessus de la couronne 100 et qui est raccordée du côté extérieur de celle-ci à une partie verticale s'étendant vers le bas au-dessous du niveau du plateau 150. Le bras 348 a une partie horizontale qui s'étend au-dessus de la couronne 200 et qui est raccordée du côté intérieur de celle-ci à une partie verticale s'étendant vers le bas au-dessous du niveau du plateau 150. Les barreaux 342, 344 sont mobiles verticalement ainsi qu'en pivotement autour de l'axe A, comme décrit plus loin en détail. A cet effet, les bras 346, 348 peuvent être mûs par vérin roto-linéaire.

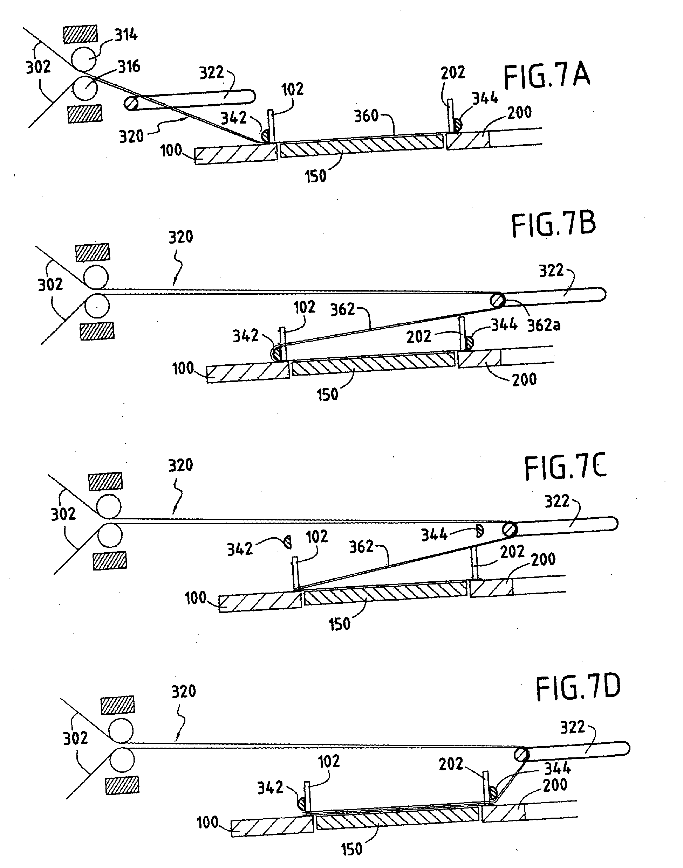

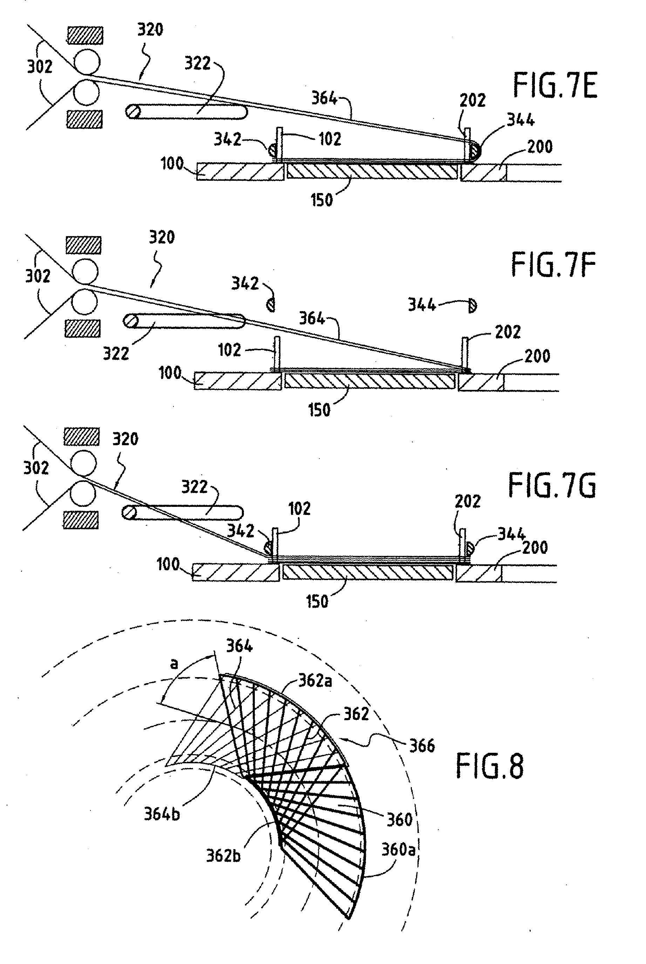

Le nappage de la nappe fibreuse 320 au moyen de la navette 322 et des barreaux 342, 344 sera maintenant décrit en référence aux figures 7A à 7G et 8.

Sur la figure 7A, un segment 360 de la nappe 320 a été déposé et engagé sur les picots 102 et 202 au moyen des barreaux 342, 344, la navette 322 étant en position arrière.

La navette 322 est alors déplacée vers sa position avant amenant la nappe 320 vers la couronne interne 200 en passant au-dessus du barreau 342 (figure 7B). La navette 322 prend appui par son côté interne sur la nappe 320 et provoque le resserrement progressif de celle-ci en diminuant sa largeur tout en donnant la courbure souhaitée à l'extrémité intérieure 362b du nouveau segment de nappe 362 amené.

Les barreaux 342, 344 sont déplacés successivement en rotation vers l'amont, pour être complètement dégagés de dessous le segment 362 de sorte que la nappe 320 se resserre étroitement autour des picots 102 sous l'effet de la tension de la nappe, puis vers le haut, ensuite vers l'aval (c'est la situation représentée sur la figure 6) pour se placer au-dessus du segment 362 (figure 7C) et enfin vers le bas pour engager le segment 362 sur les picots 102, 202 avec appui vers les couronnes interne et externe (figure 7D).

La navette 322 est alors déplacée vers sa position arrière. Sous l'effet de la tension exercée sur les rubans constitutifs de la nappe 320, celle-ci s'enroule autour du barreau 344 et un nouveau segment 364 de nappe s'étend entre les couronnes interne et externe (figure 7E).

Les barreaux 342, 344 sont à nouveau déplacés successivement en rotation vers l'amont, pour être complètement dégagés de dessous le segment 364 de sorte que la nappe 320 se resserre étroitement autour des picots 202 sous l'effet de sa tension, puis vers le haut, ensuite vers l'aval pour se placer au-dessus du segment 364 (figure 7F) et enfin vers le bas pour engager le segment 364 sur les picots 102, 202 (figure 7G). On se retrouve alors dans la configuration de la figure 7A et le processus est poursuivi de la même manière.

Le nappage de la nappe 320 est réalisé avec entraînement des couronnes 100 et 200 en rotation. Le mouvement de rotation peut être continu. On veillera alors à conférer aux barreaux 342, 344 une longueur suffisante pour qu'ils prennent appui sur toute la largeur de la nappe lors de l'engagement sur les picots 102, 202. On pourrait aussi conférer aux couronnes 100 et 200 un mouvement de rotation discontinu, avec, par exemple, interruption lors de l'action des barreaux 342, 344 sur la nappe 320.

Par l'effet de la rotation des couronnes 100, 200, les segments 360, 362, 364 de nappe 320 déposés successivement se croisent comme montré sur la figure 8. Le mouvement de rotation des couronnes 100, 200 et le mouvement de translation de la navette 322 sont de préférence choisis tels que, pour une largeur de nappe 320 donnée, les extrémités extérieures successives telles que 360a et 362a, et extrémités intérieures successives, telles que 362b, 364b, des segments de nappe sont juxtaposées. On obtient ainsi une nappe transversale 366 qui s'étend entre les couronnes 100 et 200 en présentant une densité sensiblement constante le long d'une même circonférence mais avec une densité croissante entre la couronne extérieure 100 et la couronne intérieure 200. On choisit aussi de préférence une largeur de nappe telle que les rubans 302 de segments de nappe successivement déposés forment un angle a compris entre 45° et 75° avec une tangente à la direction circonférentielle au niveau de la circonférence médiane. De préférence encore, cet angle a est d'environ 60°, comme montré sur la figure 8.

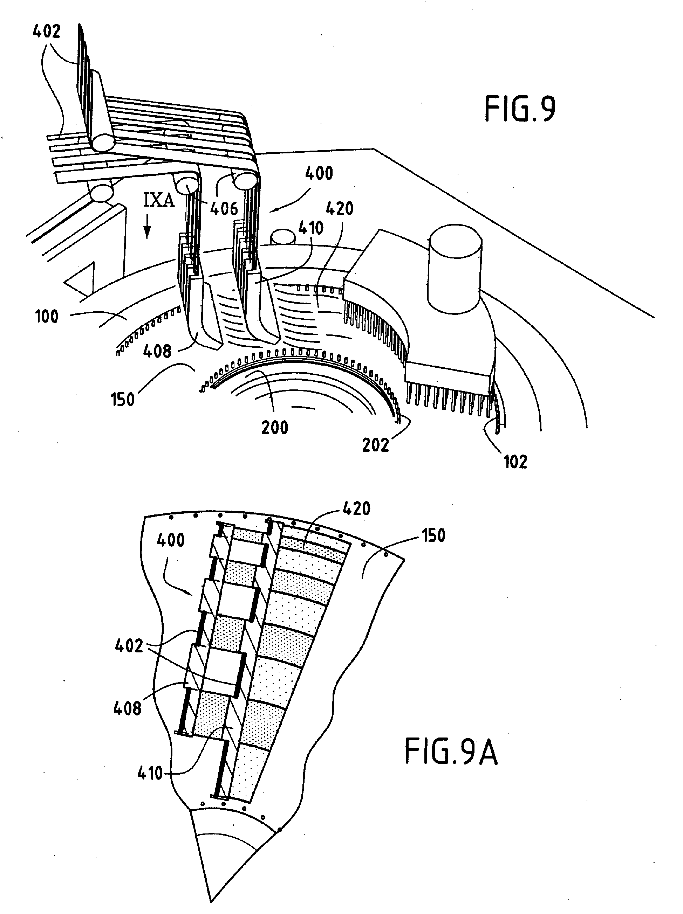

Le dispositif d'alimentation et de dépôt 400 (figure 9) reçoit une pluralité de rubans 402 formés chacun par l'étalement d'un câble. Les rubans 402 passent sur des dispositifs de tension et de préparation (non représentés) analogues à ceux de la figure 5, puis sur des rouleaux de renvoi 406 et sont guidés jusqu'au-dessus et à proximité de la surface supérieure du plateau 150 par des guides 408, 410. Comme montré en coupe et à échelle agrandie sur la figure 9A, les guides 408, 410 se présentent sous forme de peignes délimitant chacun une rangée de passages alignés en direction sensiblement radiale entre les couronnes 100 et 200. Les guides 408, 410 sont disposés à proximité l'un de l'autre et avec les passages du guide 408 intercalés (ou en quinconce) par rapport à ceux du guide 410. Les rubans issus des guides 408, 410 se trouvent juxtaposés pour former une nappe circonférentielle 420 s'étendant entre les couronnes 100 et 200. Les rubans 402 parviennent aux guides 408, 410 dans une direction verticale ou inclinée par rapport au plateau 150. On confère aux guides 408, 410, et aux passages qu'ils comportent, une forme incurvée afin d'amener les rubans 402 en sortie des guides sensiblement tangentiellement par rapport à l'horizontale. Les guides 408, 410 ont des passages de largeur correspondant à celles des rubans 402. Ils permettent donc de contrôler la largeur ainsi que le positionnement des rubans 402 formant la nappe circonférentielle 420.

Le dispositif 400 étant disposé en aval du dispositif 300, la nappe circonférentielle 420 vient se déposer au-dessus de la nappe transversale 360, sur le plateau 150, entre les couronnes 100, 200. Dans le cas illustré par la figure 8 où les éléments (rubans 302) de la nappe 360 forment un angle d'environ 60° avec la tangente à direction circonférentielle au niveau de la circonférence médiane, l'apport de la nappe circonférentielle ajoute des éléments (rubans 402) qui, à ce même niveau, forment aussi un angle de 60° avec les éléments de la nappe 360 ce qui, après liaison entre les nappes permet alors d'obtenir des éléments de renfort à 3 x 60° environ.

On confère avantageusement à la nappe 420 une densité décroissante entre la couronne extérieure 100 et la couronne intérieure 200 pour compenser la densité croissante de la nappe 360 et obtenir un ensemble nappe 360/nappe 420 ayant une densité sensiblement uniforme sur toute sa largeur. On pourra à cet effet former la nappe 420 avec des rubans de même largeur mais issus de câbles de titres décroissants entre les couronnes externe et interne, ou avec des rubans issus de câbles de même titre mais de largeur croissante (étalement plus important) comme montré sur la figure 9, ou en combinant les deux possibilités.

Le dispositif de liaison 500 est avantageusement constitué par un dispositif d'aiguilletage. Il comporte une tête d'aiguilletage 502 qui est entraînée en mouvement vertical alternatif par exemple par un mécanisme de type bielle-manivelle (non représenté). La tête 502 porte une pluralité d'aiguilles 504 à barbes qui réalisent une liaison entre les nappes 360 et 420 par prélèvement de fibres et déplacement de celles-ci en direction verticale (ou direction Z), comme bien connu en soi.

La tête d'aiguilletage s'étend sur un secteur d'anneau. La partie du plateau 150 située sous la tête d'aiguilletage présente des perforations 156 au droit des aiguilles 504 afin de pouvoir être traversées par celles-ci sans endommagement du plateau, les aiguilles étant réparties pour permettre l'obtention d'une densité d'aiguilletage sensiblement uniforme entre les bords externe et interne.

La disposition du dispositif de liaison 500 immédiatement en aval du dispositif 400 permet de fixer la nappe 420 dès son dépôt et limite le risque d'une désorganisation de la nappe 420 avant sa fixation avec la nappe 360. Il s'agit donc d'une disposition préférée, mais non nécessaire. On pourrait envisager un dépôt de la nappe circonférentielle avant la formation de la nappe transversale.

Au fur et à mesure de la rotation des couronnes 100, 200, une structure fibreuse est construite formée par la superposition de couches formées alternativement par la nappe transversale 360 et par la nappe circonférentielle 420, celles-ci s'enroulant en hélices superposées et entrelacées. L'aiguilletage est réalisé avec une pénétration des aiguilles sur plus de 2 couches de sorte que les parties nouvellement formées des nappes 360 et 420 sont liées entre elles et à la partie sous-jacente de la structure fibreuse annulaire en cours de formation.

Afin de réaliser une liaison sensiblement homogène dans toute l'épaisseur de la structure fibreuse, il est souhaitable de faire en sorte que la profondeur de pénétration des aiguilles soit sensiblement constante. A cet effet, au fur et à mesure de la formation de la structure fibreuse, le plateau support 150 est déplacé vers le bas. Au début de la formation de la structure fibreuse, le plateau support 150 est à niveau horizontal situé à proximité du sommet des picots 102, 202 (figure 10A). Ensuite, le plateau support 150 est déplacé vers le bas (figure 10B) la formation des nappes transversale et circonférentielle étant toujours sensiblement au même niveau horizontal. La profondeur de pénétration des aiguilles correspond à plus de deux couches, les aiguilles traversent les perforations 156 du plateau au début du processus, puis, lorsque la structure fibreuse a atteint une certaine épaisseur, ne parviennent plus jusqu'à la couche inférieure de celle-ci.

On notera que la liaison de couches fibreuses par aiguilletage au fur et à mesure de leur superposition sur un support avec descente progressive de celui-ci pour conserver une profondeur de pénétration des aiguilles sensiblement constante est bien connue en elle-même. Ainsi, dans le cas présent, on pourra adopter pour le plateau 150 une loi de descente semblable à celle décrite dans le document US 5 792 715 déjà cité et la profondeur de pénétration des aiguilles pourra être contrôlée comme décrit dans le document US 6 374 469. Le mouvement de descente du plateau 150 pourra être réalisé de façon continue, ou de façon discontinue en imposant un pas de descente après chaque rotation complète des couronnes 100 et 200.

Lors de la liaison par aiguilletage, la structure fibreuse en cours de fabrication est maintenue latéralement par l'engagement des spires successives de la nappe transversale 360 sur les picots 102, 202, les barreaux 342, 344 faisant progressivement descendre la structure fibreuse sur les picots à chaque fois qu'ils sont appliqués sur le dernier segment nappé de la nappe 320. Il est donc nécessaire de conférer aux picots une hauteur au moins égale et de préférence quelque peu supérieure à l'épaisseur de la structure fibreuse annulaire à réaliser.

Lorsque l'épaisseur désirée de la structure fibreuse annulaire a été atteinte, la tête d'aiguilletage 502 et les guides 408, 410 sont escamotés, la navette 322 est amenée en position arrière, les nappes 360 et 420 sont coupées et la structure fibreuse est évacuée par relèvement du plateau 150 qui la dégage des picots 102, 202 (figure 10C). En variante, le dégagement de la structure fibreuse pourrait être obtenu par descente des couronnes interne 100 et externe 200, le plateau 150 étant par exemple maintenu dans la position atteinte à la fin de la fabrication de la structure fibreuse.

Dans la description qui précède, on a envisagé la réalisation de chaque nappe 320, 420 par plusieurs rubans juxtaposés obtenus par étalement de câbles. En variante, l'une et/ou l'autre des nappes 320, 420 pourrait être formée par étalement d'un seul câble ou par un ensemble de fils ou câbles unidirectionnels.

Selon d'autres variantes de réalisation, des systèmes de gestion automatisée de l'étalement de câbles et de contrôle automatique de position de nappe tels que décrits dans les documents US 6 687 564 et US 6 690 987 pourront être utilisés.

La nature des fibres constituant les nappes fibreuses 320 et 420 dépend de l'application envisagée. Dans le cas de structures fibreuses annulaires constitutives de préformes pour disques de frein en composite C/C, on peut utiliser des fibres de carbone, ou des fibres de précurseur de carbone, par exemple des fibres de polyacrylonitrile préoxydé. Dans le cas de fibres de précurseur de carbone, une transformation finale en carbone par traitement thermique est réalisée après fabrication de la structure fibreuse.

### Exemples 1-4

Une structure fibreuse destinée à constituer une préforme annulaire de disque de frein en matériau composite C/C et ayant un diamètre extérieur Dₒ de 445 mm et un diamètre intérieur Dᵢ de 226 mm est réalisée par superposition et aiguilletage d'une nappe transversale et d'une nappe circonférentielle obtenues comme suit.

Des câbles de carbone sont utilisés qui sont formés de 50 000 filaments (50 K) ou 24 000 filaments (24 K) ayant des masses linéaires respectives de 3,7 kTex et 1,6 kTex. Le nombre de câbles qui, après étalement, forment la nappe transversale et la nappe longitudinale et les largeurs W des rubans obtenus par étalement des câbles sont choisis afin d'obtenir une préforme de densité sensiblement uniforme avec les caractéristiques suivantes :
- un angle a entre les rubans formant la nappe transversale et une tangente à la circonférence médiane compris entre 45° et 75°, de préférence environ 60°,
- un rapport R entre la fraction de masse représentée par la nappe circonférentielle et la fraction de masse représentée par la nappe transversale d'environ 1/3:2/3.

Le tableau 1 ci-après indique différentes possibilités d'obtenir les caractéristiques désirées.

**Tableau 1**

| Exemple | Câbles utilisés | Nappe formant la nappe transversale après nappage | Nappe circonférentielle | R | a |
|---|---|---|---|---|---|
| 1 | 50 K | 13 câbles | 9 câbles | 35:65 | 60° |
| | 3,7 kTex | W à Dₒ=25,9 mm | W variant de | | |
| | | W à Dᵢ 17,7 mm | 8 mm à Dₒ à | | |
| | | | 27 mm à Dᵢ | | |
| 2 | 50 K | 11 câbles | 7 câbles | 34:66 | 58,4° |
| | 3,7 kTex | W à Dₒ = 22,6 mm | W variant de | | |
| | | W àDᵢ = 7,9 mm | 10 mm à Dₒ à | | |
| | | | 33 mm à Dᵢ | | |
| 3 | 50 K | 20 câbles | 9 câbles | 32:68 | 54,3° |
| | 3,7 kTex | W à Dₒ=17,4 mm | W variant de | | |
| | | W à Dᵢ = 4,9 mm | 8 mm à Dₒ à | | |
| | | | 27 mm à Dᵢ | | |
| 4 | 24 K | 28 câbles | 18 câbles | 34:66 | 58,4° |
| | 1,6 kTex | W à Dₒ = 8,9 mm | W variant de | | |
| | | W à Dᵢ = 3,1 mm | 4,7 mm à Dₒ à | | |
| | | | 11 mm à Dᵢ) | | |

### Exemples 5-8

On procède comme dans les exemples 1 à 4, mais avec des diamètres externe et interne différents, à savoir Dₒ = 553 mm et Dᵢ = 289 mm.

Le tableau 2 ci-après indique différentes possibilités d'obtenir, les même caractéristiques désirées pour l'angle a et le rapport R que dans les exemples 1 à 4.

**Tableau 2**

| Exemple | Câbles utilisés | Nappe formant la nappe transversale après nappage | Nappe circonférentielle | R | a |
|---|---|---|---|---|---|
| 5 | 50 K | 17 câbles | 11 câbles | 35:65 | 56,2° |
| | 3,7 kTex | W à Dₒ= 18,0 mm | W variant de | | |
| | | W à Dᵢ = 6,1 mm | 8 mm à Do à 20 mm à Dᵢ | | |
| 6 | 50 K | 14 câbles | 8 câbles | 32:68 | 56,2° |
| | 3,7 kTex | W à Dₒ=21,8mm | W variant de | | |
| | | W à Dᵢ = 7,4mm | 9 mm à Dₒ à | | |
| | | | 29 mm à Dᵢ | | |
| 7 | 50 K | 12 câbles | 12 câbles | 32:68 | 75° |
| | 3,7 kTex | W à Dₒ = 13,1 mm | W variant de | | |
| | | W à Dᵢ = 6,4 mm | 7 mm à Do à | | |
| | | | 23 mm à Dᵢ | | |
| 8 | 24 K | 28 câbles | 18 câbles | 34:66 | 56,2° |
| | 1,6 kTex | W à Dₒ =10,9 mm | W variant de | | |
| | | W à Dᵢ =3,7 mm | 4 mm à Dₒ à | | |
| | | | 12 mm à Dᵢ | | |

## Revendications

1. Procédé pour la fabrication d'une structure fibreuse annulaire, **caractérisé en ce qu'**il comporte les étapes qui consistent à :
- fournir une première nappe fibreuse (320) formée d'éléments sensiblement unidirectionnels (302) ;
- former une première nappe annulaire, ou nappe transversale, par dépôt de la première nappe fibreuse (320) alternativement dans un sens et dans l'autre entre des couronnes circulaires, externe (100) et interne (200) coaxiales, avec maintien au niveau desdites couronnes,
- fournir une deuxième nappe fibreuse formée d'éléments sensiblement unidirectionnels (402),
- former une deuxième nappe annulaire, ou nappe circonférentielle (420), par dépôt de la deuxième nappe fibreuse en direction circonférentielle entre ladites couronnes externe et interne,
- lier les nappes annulaires transversale et circonférentielle entre elles, et
- entraîner les nappes annulaires transversale et circonférentielle en rotation autour de l'axe des couronnes externe et interne en réalisant une pluralité de tours complets pour obtenir, directement à partir desdits éléments sensiblement unidirectionnels, une structure fibreuse annulaire épaisse ayant des couches formées par la nappe transversale qui alternent et sont liées avec des couches formées par la nappe circonférentielle.

2. Procédé selon la revendication 1, **caractérisé en ce que** le dépôt de la première nappe fibreuse (320) est réalisé en diminuant la largeur de celle-ci entre la couronne externe (100) et la couronne interne (200), et la nappe circonférentielle (420) est formée avec une densité décroissante entre la couronne externe et la couronne interne.

3. Procédé selon l'une quelconque des revendications 1 et 2, **caractérisé en ce que** le dépôt de la nappe annulaire transversale (320) est réalisé de manière à lui conférer une densité sensiblement constante le long d'une même circonférence.

4. Procédé selon l'une quelconque des revendications 1 à 3, **caractérisé en ce que** le dépôt de la première nappe fibreuse (320) est réalisé de manière que les éléments fibreux de la nappe annulaire transversale forment un angle compris entre 45° et 75° avec une tangente à la direction circonférentielle au niveau de la circonférence médiane de la nappe annulaire transversale.

5. Procédé selon l'une quelconque des revendications 1 à 4.
**caractérisé en ce que** la première nappe fibreuse (320) est formée par un câble étalé ou plusieurs câbles étalés juxtaposés (302).

6. Procédé selon l'une quelconque des revendications 1 à 5, **caractérisé en ce que** la deuxième nappe fibreuse (420) est formée par un câble étalé ou plusieurs câbles étalés juxtaposés (402).

7. Procédé selon l'une quelconque des revendications 1 à 6 **caractérisé en ce que** le maintien de la nappe transversale annulaire au niveau des couronnes externe (100) et interne (200) est réalisé au moyen de picots (102, 202) portés par lesdites couronnes.

8. Procédé selon la revendication 7 , **caractérisé en ce que** l'entraînement en rotation est réalisé par l'intermédiaire des couronnes externe (100) et interne (200).

9. Procédé selon l'une quelconque des revendications 1 à 8, **caractérisé en ce que** les nappes annulaires transversale et circonférentielle sont formées sur un support annulaire horizontal (150) qui est disposé entre les couronnes externe (100) et interne (200) et qui est abaissé au fur et à mesure de la formation de la structure fibreuse annulaire.

10. Procédé selon l'une quelconque des revendications 1 à 9 **caractérisé en ce que** le dépôt de la nappe annulaire circonférentielle est réalisé après celui de la nappe annulaire transversale et immédiatement avant la liaison entre ces nappes.

11. Installation pour la fabrication d'une structure fibreuse annulaire épaisse ayant des couches formées par une nappe fibreuse transversale qui alternent et sont liées avec des couches formées par une nappe fibreuse circonférentielle, **caractérisée en ce qu'**elle comporte :
- un dispositif (300, 322) d'amenée d'une première nappe fibreuse (320) et de dépôt de celle-ci sur un support annulaire (150) alternativement dans un sens et dans l'autre entre des couronnes circulaires coaxiales externe (100) et interne (200) situées de part et d'autre du support annulaire, pour former une première nappe annulaire, ou nappe transversale,
- des organes (102, 202) de maintien de la nappe annulaire transversale au niveau des couronnes externe et interne,
- un dispositif (400) d'amenée d'une deuxième nappe fibreuse (420) sur le support annulaire (150) et de dépôt de celle-ci en direction circonférentielle entre les couronnes externe et interne pour former une deuxième nappe annulaire, ou nappe circonférentielle,
- un dispositif (500) de liaison des nappes annulaires transversale et circonférentielle entre elles, et
- un dispositif (106, 206) d'entraînement en rotation des nappes annulaires transversale et circonférentielle autour de l'axe des couronnes externe et interne.

12. Installation selon la revendication 11, **caractérisé en ce que** le dispositif d'amenée et de dépôt de la première nappe fibreuse comprend :
- un dispositif (300) d'alimentation de la première nappe fibreuse,
- un organe (322) formant navette mobile en translation alternative entre des positions situées au-delà de la couronne externe (100) et en deçà de la couronne interne (200) et pouvant agir sur la première nappe fibreuse pour l'amener vers la couronne interne en diminuant la largeur de la nappe.

13. Installation selon la revendications 12, **caractérisée en ce que** l'organe (322) formant navette présente une partie courbe destinée à prendre appui sur la première nappe fibreuse (320) pour amener celle-ci au niveau de la couronne interne (200) en lui donnant, à ce niveau une courbure correspondant à celle de la couronne interne.

14. Installation selon l'une quelconque des revendications 11 à 13, **caractérisée en ce que** les organes de maintien de la nappe transversale sont des picots (102, 202) portés par les couronnes externe (100) et interne (200).

15. Installation selon la revendication 14, **caractérisée en ce qu'**elle comporte en outre des organes applicateurs sous forme de barreaux courbes mobiles (342, 344) pour contribuer à engager la première nappe fibreuse (320) sur les picots (102, 202) par appui sur la première nappe fibreuse.

## Claims

1. A method of fabricating an annular fiber structure, the method being **characterized in that** it comprises the steps consisting in:
providing a first fiber sheet (320)made up of substantially unidirectional elements (302);
- forming a transverse, first annular sheet by laying the first fiber sheet (320)in alternation in one direction and in the opposite direction between coaxial outer (100) and inner (200) circular rings, with the sheet being held at said rings;
· providing a second fiber sheet made up of substantially unidirectional elements (402);
· forming a circumferential, second annular sheet (420) by depositing the second fiber sheet in a circumferential direction between said outer and inner rings;
· bonding the transverse and circumferential annular sheets to each other; and
· driving the transverse and circumferential annular sheets in rotation about the axis of the outer and inner rings so as to execute a plurality of complete revolutions in order to obtain directly from said substantially unidirectional elements a thick annular fiber structure having layers made up by the transverse sheet alternating with and bonded to layers made up by the circumferential sheet.

2. A method according to claim 1, **characterized in that** the first fiber sheet (320) is laid while reducing its width between the outer ring (100) and the inner ring (200), and the circumferential sheet (420) is formed with density that decreases between the outer ring and the inner ring.

3. A method according to claim 1 or claim 2, **characterized in that** the transverse annular sheet (320) is laid in such a manner as to give it density that is substantially constant along any one circumference.

4. A method according to any one of claims 1 to 3, **characterized in that** the first fiber sheet (320) is laid in such a manner that the fiber elements of the transverse annular sheet form an angle lying in the range 45° to 75° with a tangent to the circumferential direction at the middle circumference of the transverse annular sheet.

5. A method according to any one of claims 1 to 4, **characterized in that** the first fiber sheet (320) is formed by a spread tow or a plurality of juxtaposed spread tows (302).

6. A method according to any one of claims 1 to 5, **characterized in that** the second fiber sheet (420) is formed by a spread tow or a plurality of juxtaposed spread tows (402).

7. A method according to any one of claims 1 to 6, **characterized in that** the annular transverse sheet is held at the outer (100) and inner (200) rings by means of pegs (102, 202) carried by said rings.

8. A method according to claim 7, **characterized in that** the transverse and circumferential sheets are driven in rotation via the outer (100) and inner (200) rings.

9. A method according to any one of claims 1 to 8, **characterized in that** the transverse and circumferential annular sheets are formed on a horizontal annular support (150) which is disposed between the outer (100) and inner (200) rings and which is towered progressively as the annular fiber structure is built up.

10. A method according to any one of claims 1 to 9, **characterized in that** the circumferential annular sheet is deposited after the transverse annular sheet has been laid and immediately before the sheets are bonded together.

11. An installation for fabricating a thick annular fiber structure having layers made up by a fibrous transverse sheet alternating with and bonded to layers made up by a circumferential fibrous sheet, the installation being **characterized in that** it comprises:
**·** a device (300, 322) for bringing a first fiber sheet (320) and laying it on an annular support (150) alternately in one direction and in the opposite direction between outer (100) and inner (200) coaxial circular rings situated on either side of the annular support so as to form a transverse, first annular sheet;
· members (102, 202) for holding the transverse annular sheet at the outer and inner rings;
· a device (400) for bringing a second annular sheet (420) onto the annular support (150) and depositing it in the circumferential direction between the outer and inner rings so as to form a circumferential, second annular sheet;
· a device (500) for bonding the transverse and circumferential annular sheets together; and
· a device (106, 206) for driving the transverse and circumferential annular sheets in rotation about the axis of the outer and inner rings.

12. An installation according to claims 11, **characterized in that** the device for bringing and laying the first fiber sheet comprises:
· a device (300) for feeding the first fiber sheet;
and
· a shuttle-forming member (322) that its movable in translation in reciprocation between a position situated beyond the outer ring (100) and a position situated within the inner ring (200) and capable of acting on the first fiber sheet to bring it towards the inner ring while educing the width of the sheet.

13. An installation according to claim 12, **characterized in that** the shuttle-forming member (322) presents a curved portion for bearing against the first fiber sheet (320) to bring it to the inner ring (200) while giving it curvature at the inner ring that corresponds to the curvature of the inner ring.

14. An installation according to any one of claims 11 to 13, **characterized in that** the members for holding the transverse sheet are pegs (102, 202) carried by the outer (100) and inner (200) rings.

15. An installation according to claim 14, **characterized in that** it further comprises presser members in the form of movable curved bars (342, 344) for contributing to engage the first fiber sheet (320) on the pegs (102, 202) by pressing on the first fiber sheet.

## Patentansprüche

1. Verfahren zur Herstellung einer ringförmigen Faserstruktur, **dadurch gekennzeichnet, daß** es die Schritte umfaßt, die darin bestehen:
- eine erste Faserlage (320) bereitzustellen, die von im wesentlichen unidirektionalen Elementen (302) gebildet ist,
- eine erste ringförmige Lage, oder Querlage, durch Ablegen der ersten Faserlage (320) abwechselnd in eine und in die andere Richtung zwischen einem kreisförmigen Außenkranz (100) und einem hierzu koaxialen kreisförmigen Innenkranz (200), mit einem Halten im Bereich der Kränze auszubilden,
- eine zweite Faserlage bereitzustellen, die von im wesentlichen unidirektionalen Elementen (402) gebildet ist,
- eine zweite ringförmige Lage, oder Umfangslage (420), durch Ablegen der zweiten Faserlage in Umfangsrichtung zwischen dem Außen- und dem Innenkranz auszubilden,
- die ringförmige Querlage und die ringförmige Umfangslage untereinander zu verbinden und
- die ringförmige Querlage und die ringförmige Umfangslage um die Achse des Außen- und des Innenkranzes, unter Ausführen einer Vielzahl vollständiger Umdrehungen drehanzutreiben, um direkt aus den im wesentlichen unidirektionalen Elementen eine dicke ringförmige Faserstruktur zu erhalten, die durch die Querlage gebildete Schichten aufweist, welche sich mit durch die Umfangslage gebildeten Schichten abwechseln und mit diesen verbunden sind.

2. Verfahren nach Anspruch 1, **dadurch gekennzeichnet, daß** das Ablegen der ersten Faserlage (320) unter Verringerung ihrer Breite zwischen dem Außenkranz (100) und dem Innenkranz (200) vollzogen wird und die Umfangslage (420) mit einer zwischen dem Außenkranz und dem Innenkranz abnehmenden Dichte gebildet wird.

3. Verfahren nach einem der Ansprüche 1 und 2, **dadurch gekennzeichnet, daß** das Ablegen der ringförmigen Querlage (320) derart vollzogen wird, daß ihr eine im wesentlichen konstante Dichte entlang eines gleichen Umfangs verliehen wird.

4. Verfahren nach einem der Ansprüche 1 bis 3, **dadurch gekennzeichnet, daß** das Ablegen der ersten Faserlage (320) derart vollzogen wird, daß die Faserelemente der ringförmigen Querlage mit einer Tangente an die Umfangsrichtung im Bereich des mittleren Umfangs der ringförmigen Querlage einen Winkel zwischen 45° und 75° bilden.

5. Verfahren nach einem der Ansprüche 1 bis 4, **dadurch gekennzeichnet, daß** die erste Faserlage (320) von einem ausgebreiteten Seil oder mehreren nebeneinander liegenden ausgebreiteten Seilen (302) gebildet ist.

6. Verfahren nach einem der Ansprüche 1 bis 5, **dadurch gekennzeichnet, daß** die zweite Faserlage (420) von einem ausgebreiteten Seil oder mehreren nebeneinander liegenden ausgebreiteten Seilen (402) gebildet ist.

7. Verfahren nach einem der Ansprüche 1 bis 6, **dadurch gekennzeichnet, daß** das Halten der ringförmigen Querlage im Bereich des Außenkranzes (100) und des Innenkranzes (200) mittels von den Kränzen getragenen Stiften (102, 202) erfolgt.

8. Verfahren nach Anspruch 7, **dadurch gekennzeichnet, daß** der Drehantrieb über den Außenkranz (100) und den Innenkranz (200) erfolgt.

9. Verfahren nach einem der Ansprüche 1 bis 8, **dadurch gekennzeichnet, daß** die ringförmige Querlage und die ringförmige Umfangslage auf einem ringförmigen horizontalen Träger (150) gebildet werden, der zwischen dem Außenkranz (100) und dem Innenkranz (200) angeordnet ist und der der Bildung der ringförmigen Faserstruktur entsprechend abgesenkt wird.

10. Verfahren nach einem der Ansprüche 1 bis 9, **dadurch gekennzeichnet, daß** das Ablegen der ringförmigen Umfangslage nach dem der ringförmigen Querlage und unmittelbar vor dem Verbinden dieser Lagen vollzogen wird.

11. Einrichtung für die Herstellung einer dicken, ringförmigen Faserstruktur, die durch eine Querfaserlage gebildete Schichten aufweist, welche sich mit durch eine Umfangsfaserlage gebildeten Schichten abwechseln und mit diesen verbunden sind, **dadurch gekennzeichnet, daß** sie umfaßt:
- eine Vorrichtung (300, 322) zum Zuführen einer ersten Faserlage (320) und zum Ablegen dieser auf einem ringförmigen Träger (150) abwechselnd in eine und in die andere Richtung zwischen einem kreisförmigen Außenkranz (100) und einem hierzu koaxialen kreisförmigen Innenkranz (200), die auf beiden Seiten des ringförmigen Trägers angeordnet sind, um eine erste ringförmige Lage oder Querlage zu bilden,
- Organe (102, 202) zum Halten der ringförmigen Querlage im Bereich des Außen- und des Innenkranzes,
- eine Vorrichtung (400) zum Zuführen einer zweiten Faserlage (420) auf den ringförmigen Träger (150) und zum Ablegen dieser in Umfangsrichtung zwischen dem Außenkranz und dem Innenkranz, um eine zweite ringförmige Lage oder Umfangslage zu bilden,
- eine Vorrichtung (500) zum Verbinden der ringförmigen Querlage und der ringförmigen Umfangslage untereinander und
- eine Vorrichtung (106, 206) zum Drehantreiben der ringförmigen Querlage und der ringförmigen Umfangslage um die Achse des Außen- und des Innenkranzes.

12. Einrichtung nach Anspruch 11, **dadurch gekennzeichnet, daß** die Vorrichtung zum Zuführen und zum Ablegen der ersten Faserlage umfaßt:
- eine Vorrichtung (300) zum Zuführen der ersten Faserlage,
- ein ein Schiffchen bildendes Organ (322), das zwischen jenseits des Außenkranzes (100) und diesseits des Innenkranzes (200) befindlichen Positionen hin und her verschiebebeweglich ist, und das auf die erste Faserlage wirken kann, um sie unter Verringerung der Breite der Lage in Richtung des Innenkranzes zu führen.

13. Einrichtung nach Anspruch 12, **dadurch gekennzeichnet, daß** das ein Schiffchen bildende Organ (322) einen gekrümmten Teil aufweist, der dazu bestimmt ist, sich an der ersten Faserlage (320) abzustützen, um diese in den Bereich des Innenkranzes (200) zu führen und ihr dabei in diesem Bereich eine der Krümmung des Innenkranzes entsprechende Krümmung zu verleihen.

14. Einrichtung nach einem der Ansprüche 11 bis 13, **dadurch gekennzeichnet, daß** die Organe zum Halten der Querlage von dem Außenkranz (100) und dem Innenkranz (200) getragene Stifte (102, 202) sind.

15. Einrichtung nach Anspruch 14, **dadurch gekennzeichnet, daß** sie ferner Anlegeorgane in Form von beweglichen gebogenen Stäben (342, 344) umfaßt, um mitzuhelfen, die erste Faserlage (320) durch Abstützen an der ersten Faserlage auf die Stifte (102, 202) aufzustecken.
